# EUROPEAN PATENT APPLICATION

(11) **EP 4 306 790 A1**
(43) Date of publication of application: **17.01.2024**
(21) Application number: 23180891.6
(22) Date of filing: 22.06.2023
(51) Int. Cl.: F02K 3/06, F02C 3/14

(54) **GAS TURBINE ENGINE**

(30) Priority: 11.07.2022 GB 202210142
(71) Applicant: Rolls-Royce plc, London N1 9FX (GB)
(72) Inventor: Bradbrook, Stephen, Derby, DE24 8BJ (GB); Smith, William, Derby, DE24 8BJ (GB); Bradley, Jonathan, Derby, DE24 8BJ (GB)
(74) Representative: Rolls-Royce plc

(57) **Abstract**

A novel configuration for an axial flow gas turbine engine for an aircraft has an engine core having a core length and comprising a first turbine, an axial compressor, and a drive connecting the first turbine to the axial compressor, the engine core further comprising a second turbine, and a fan shaft connecting the second turbine to a fan located upstream of the engine core, the fan comprising a plurality of fan blades extending from a fan hub, the fan having a tip radius in the range from 90mm to 225mm and wherein the ratio of fan tip radius to an engine length is of the order 0.15 to 0.25. The engine may have 3, 4 or 5 compressor stages and a combustor volume (in litres) which when divided by the fan tip radius (in mm) is in the range 0.015 to 0.083. The fan may be a multistage fan configured to permit an electric motor to be located within the fan hub diameter.

## Description

The present disclosure relates to a gas turbine engine for air vehicles, and more specifically to a gas turbine engine with specified relative component dimensions.

Gas turbine engines have been developed to provide power for many different air applications including hobby, defence and civil. Each industry has their own requirements and although the present disclosure has been written with a primary focus on civil it will be appreciated that an engine with the specified relative component dimensions may also be used for appropriate products in the defence industry.

Whilst some individuals may naively suggest that conventional gas turbines could be scaled to a small size the skilled person would appreciate that simply scaling components of a known engine type may not provide a corresponding scaling of power, thrust and/or efficiency. Particularly for smaller engines the size required for installation of a scaled engine may provide insufficient thrust, power or efficiency and concomitantly a scaled engine providing sufficient thrust, power or efficiency may be inappropriately large for installation on an airframe. Reconsideration of engine parameters may therefore be appropriate.

Small hobby aircraft sometimes use gas turbines engines as their power source. The scale of these may be too small to be beneficial for commercial use which may require transport of high value cargo items, such as people and/or cargo many times more valuable than the cost of the engine. Commercial use engines may face a more stringent regulatory approval than model aircraft. Accordingly model aircraft may be simplified below a level that would be approved in the commercial market and the skilled person would appreciate that an engine produced for entertainment purposes may not provide sufficient reliability, etc. to meet the requirements set by the FAA, the CAA, or EASA.

Additionally, commercial aircraft may have to operate for longer periods than hobby aircraft without refuelling. Thrust levels must be maintained whilst carrying the requisite combined weight of fuel and load. Hobby engines in their simplicity may lack the fuel efficiency and/or thrust levels required to deliver cargo over the required range for an amount of carried fuel.

The skilled person would appreciate that, if the overall size of a gas turbine engine is decreased, one problem that may need to be addressed is how to ensure a sufficient thrust level is maintained. This is of interest for air vehicles where a finite amount of fuel is available and particular thrust and fuel efficiency is required to maintain the vehicle in flight for a given operational period. It would be appreciated that this may not be a factor for ground-based gas turbine engines such as those providing electrical generative power, or those where fuel is easily resupplied, or the fuel-tank size is not a significant limiting factor.

The skilled person would also appreciate that greater thrust levels may be achieved in a smaller size engine that is arranged as a turbojet rather than a turbofan. However, the skilled person would also understand that turbojets are noisier than turbofans and have a significantly worse Specific Fuel Consumption (SFC) and may require significantly higher volumes of fuel. The noise is likely to be unacceptable in civil operations and may require extra fuel to be carried at the expense of passengers and cargo.

The skilled person would appreciate that simply scaling components of a known engine type may not provide a corresponding scaling of the operational window of the engine. For example, insufficient air and fuel mixing volumes and/or combustion volumes may induce problems with flame stability, relight and stable thrust.

Manufacturing tolerances of components and systems at smaller scales become increasingly important. Axial compressors become highly sensitive at very small scale with, for example, surface finish, tip clearance, stage spacing, etc. having to be so precise that quality control in manufacturing would reject an increasing number of parts resulting in uneconomic manufacture. Similarly, in flight damage, wear, dirt, or other minor issues would take the component or system away from acceptable tolerance leading to early replacement and additional cost that is likely to be unacceptable to economic operation. Reconsideration of engine parameters may therefore be appropriate.

CN109083764 describes an engine where a single fan-stage ducted turbofan which a large bypass ratio has been scaled to a maximum radius of 173mm and a maximum length of 540mm. The engine has an 8 stage compressor and a 4 stage turbine in a two-shaft arrangement. The compressor and turbine are separated axially by an annular combustor and there is a nose-cone upstream of the fan. A static compressor casing supports an array of guide-vanes downstream of the fan.

As used herein, a range "from value X to value Y" or "between value X and value Y", or the likes, denotes an inclusive range; including the bounding values of X and Y. As used herein, the term "axial plane" denotes a plane extending along the length of an engine, parallel to and containing an axial centreline of the engine, and the term "radial plane" denotes a plane extending perpendicular to the axial centreline of the engine, so including all radial lines at the axial position of the radial plane. Axial planes may also be referred to as longitudinal planes, as they extend along the length of the engine. A radial distance or an axial distance is therefore a distance in a radial or axial plane, respectively.

As used herein, the terms upstream and downstream denote relative locations along the axial centreline of the engine in the direction of the main intended use airflow through the engine. Axially forward and axially rearward denote relative locations along the axial centreline of the engine in the direction of the main intended use airflow through the engine.

The skilled person will appreciate that equivalent units should be selected for the fan face area, turbine diameter and core length-e.g. if the area is given in m², the lengths should both be provided in metres. If the volume is given in m³, the lengths should be provided in metres.

According to one aspect there is provided a gas turbine engine for an aircraft, the engine comprising an engine core having a core length and comprising a first turbine, an axial compressor, and a drive connecting the first turbine to the axial compressor, the engine core further comprising a second turbine, and a fan shaft connecting the second turbine to a fan located upstream of the engine core, the fan comprising a plurality of fan blades extending from a fan hub, the fan having a tip radius in the range from 90mm to 225mm and wherein the fan has two stages of rotating fan blades with a first stage upstream of, and axially separated from, a second stage with an array of stators axially located between the first stage and the second stage.

### Fan Radius centreline to tip

The fan tip radius may be measured between a centreline of the engine and an outermost tip of each fan blade at its leading edge-this may equivalently be described as the fan tip radius being defined as the radial distance between a centreline of the engine and an outermost tip of each fan blade at its leading edge. The fan face area may be equal to π multiplied by the square of the fan tip radius.

The fan tip radius, measured between a centreline of the engine and an outermost tip of each fan blade at its leading edge, may be in the range from 90mm to 225mm, for example in the range from 110mm to 225mm, or alternatively in the range from 150mm to 200mm. Within these ranges the fan tip radius may be greater than any of: 90mm, 95mm, 100mm, 105mm, 110mm, 115mm, 120mm, 125mm, 130mm, 135mm, 140mm, 145mm, 150mm, 155mm, 160mm, 165mm, 170mm, 175mm, or 180mm, or 185mm, or 190mm, or 195mm, or 200mm, or 205mm, or 210mm, or 215mm, or 220mm. The fan tip radius may be around any of: 90mm, 95mm, 100mm, 105mm, 110mm, 115mm, 120mm, 125mm, 130mm, 135mm, 140mm, 145mm, 150mm, 155mm, 160mm, 165mm, 170mm, 175mm, or 180mm, or 185mm, or 190mm, or 195mm, or 200mm, or 205mm, or 210mm, or 215mm, 220mm, or 225mm.

The fan tip radius, measured between a centreline of the engine and an outermost tip of each fan blade at its leading edge, may be in the range from 90mm to 225mm, for example in the range from 110mm to 225mm, or alternatively in the range from 150mm to 200mm. Within these ranges the fan tip radius may be less than any of: 95mm, 100mm, 105mm, 110mm, 115mm, 120mm, 125mm, 130mm, 135mm, 140mm, 145mm, 150mm, 155mm, 160mm, 165mm, 170mm, 175mm, or 180mm, or 185mm, or 190mm, or 195mm, or 200mm, or 205mm, or 210mm, or 215mm, or 220mm, or 225mm.

The second stage fan tip radius may be in the range of 80 to 120%, or alternatively any of 90% to 110%, or 95 to 110%, or 90 to 100% or 95 to 100%, or 100 to 105%, or 100 to 110% of the first stage fan tip radius.

The fan blades of each stage, are arranged in a circumferential array that rotates about the centreline of the engine. The fan may comprise a plurality of fan blades extending radially from a hub, each fan blade having a leading edge and a trailing edge.

The fan may have a hub that provides a radially inner surface of the main air path through the fan. The radially outer surface of the main air path may be provided by a fan casing. The fan blades may extend radially outwards across the air path from the hub towards the fan casing surrounding the fan.

The fan hub may extend axially rearwardly from a nose at an axially forward extent of the hub. The fan hub may extend axially rearwardly from the axial position of the leading edge of an array of fan blades. The fan hub may extend axially forward from the axial position of the trailing edge of the stators associated with an array of fan blades. The fan hub may extend axially forward from the axial position of the trailing edge of the stators associated with the downstream array of fan blades. The fan hub may extend axially forward from the axial position of the trailing edge of the downstream array of fan blades.

The fan hub radius, measured between a centreline of the engine and a radially outer surface of the fan hub, may increase as the hub extends in an axial rearwards direction. At the leading edge of the most forward fan blades the fan hub radius may be in the range from 36mm to 90mm, for example in the range 44mm to 90mm, or 65mm to 90mm. Within these ranges the fan hub radius may be greater than any of: 36mm, 40mm, 45mm, 50mm, 55mm, 60mm, 65mm, 70mm, 75mm, 80mm, 85mm. The fan hub radius may be around any of: 40mm, 45mm, 55mm, 60mm, 65mm, 70mm, 75mm, 80mm, 85mm, or 90mm.

At the trailing edge of most rearward fan blades the fan hub radius may be in the range from 65mm to 165mm, for example in the range 80mm to 165mm, 80mm to 120mm, or 120mm to 165mm. Within these ranges the fan hub radius may be greater than any of: 65mm, 70mm, 75mm, 80mm, 85mm, 90mm, 95mm, 100mm, 105mm, 110mm, 115mm, 120mm, 125mm, 130mm, 135mm, 140mm, 145mm, 150mm, 155mm, 160mm. The fan hub radius may be around any of: 65mm, 70mm, 75mm, 80mm, 85mm, 90mm, 95mm, 100mm, 105mm, 110mm, 115mm, 120mm, 125mm, 130mm, 135mm, 140mm, 145mm, 150mm, 155mm, 160mm, or 165mm.

The fan blade span may be measured at an axial location and defined as the distance between the radially outer surface of the fan hub and an outermost tip of each fan blade at its leading edge. The axial location may be at the leading edge of the most forward fan blade. The axial location may be at the trailing edge of the most forward fan blade. The axial location may be at a point between the leading edge and the trailing edge of the most forward fan blade. The axial location may be at the leading edge of the most rearward fan blade. The axial location may be at the trailing edge of the most rearward fan blade. The axial location may be at a point between the leading edge and the trailing edge of the most rearward fan blade.

The fan blade span of the axially forward fan stage may be in the range from 60mm to 150mm, for example in the range from 70mm to 150mm, or alternatively in the range from 100mm to 150mm. Within these ranges the fan blade span may be greater than any of: 60mm, 65mm, 70mm, 75mm, 80mm, 85mm, 90mm, 95mm, 100mm, 105mm, 110mm, 115mm, 120mm, 125mm, 130mm, 135mm, 140mm, or 145mm. The fan blade span may be around any of: 60mm, 65mm, 70mm, 75mm, 80mm, 85mm, 90mm, 95mm, 100mm, 105mm, 110mm, 115mm, 120mm, 125mm, 130mm, 135mm, 140mm, or 145mm.

The fan blade span of the axially rearward fan stage may be in the range from 35mm to 90mm, for example in the range from 35mm to 65mm, or alternatively in the range from 65mm to 90mm. Within these ranges the fan blade span may be greater than any of: 40mm, 45mm, 50mm, 55mm, 60mm, 65mm, 70mm, 75mm, 80mm, or 85mm. The fan blade span may be around any of: 35mm 40mm, 45mm, 50mm, 55mm, 60mm, 65mm, 70mm, 75mm, 80mm, 85mm, or 90mm The skilled person will appreciate that by providing a gas turbine with any of the above dimensions it is possible to locate the fan within a small diameter nacelle. The size permits the use of cheaper and lighter materials for the blades, for example aluminium. It will be appreciated that where a two-stage fan is used with any of the above dimensions this may generate more thrust than an equivalently sized single stage fan and may allow the size of the fan to be reduced below that of known aircraft gas turbines. It will be further appreciated that a change in the fan hub radius between the first and second stage fan increases the compression of the air passing through the fan. Each fan stage may have an upstream blade that rotates about the axis of the engine and a vane. The vanes and blades span a fan passage that is defined at its radially inner extent by a fan hub and at its radially outer extent by a fan case. Both the fan hub and the fan case may present a substantially smooth surface for the air flow however, both may contain small discontinuities where two parts joins or vents are provided for air take-off, etc.

The fan passage radius (FPR) may be measured as the distance between a centreline of the engine and the radially inner surface of the fan case.

Along the axial extent of the fan casing taken from the leading edge of an upstream fan blade to the trailing edge of a downstream fan stator the difference in FPR from that which is measured at the leading edge of an upstream fan blade may be below 15%, for example below 10%, or alternatively below 5%, excluding discontinuities.

Optionally, for example for an engine with a fan tip radius in the range from 90mm to 225mm, the difference in FPR from that which is measured at the leading edge of an upstream fan blade may be below 33mm, for example below 22mm, or alternatively below 12mm, excluding discontinuities. Optionally, for example for an engine with a fan tip radius in the range from 110mm to 200mm the difference in FPR from that which is measured at the leading edge of an upstream fan blade may be below 30mm, for example below 20mm, or alternatively below 10mm, excluding discontinuities. Optionally, for example for an engine with a fan tip radius in the range from 150mm to 180mm the difference in FPR from that which is measured at the leading edge of an upstream fan blade may be below 27mm, for example below 18mm, or alternatively below 9mm, excluding discontinuities

Aircraft gas turbine engines provide both propulsive and electric power for aircraft. Consequently, such engines may comprise electric machines such as generators for providing electric power. Further electric machines in the form of motors configured to drive fluid pumps such as oil and fuel pumps may also be provided. The function of the generators and motors can be combined, such that, for instance, a generator may operate as a starter motor during starting. As electrical power demands increase, and electrical motors are increasingly used to replace hydraulic and pneumatic motors in aircraft, the size of electric machines on aircraft is steadily increasing relative to the size of the gas turbine engines. Consequently, packaging of such machines within the limited space available is becoming increasingly difficult. The person of skill in the art would appreciate that by providing a gas turbine with the above dimensions additional space may be created within the fan hub that may be used to house an electric generator or other components.

The fan may be driven by a turbine that may have one or more stages. A shaft may connect the turbine to the fan. The length of the engine, defined as the distance between the leading edge of the first fan blade and the final turbine stage trailing edge, may be in the range: 420mm to 1020mm, optionally in the range 420 to 780mm, and further optionally in the range 740 to 1020mm. Within these ranges the engine length may be above 420mm, or 440mm, or 460mm or 480mm, or 500mm or 520mm or 540mm or 560m or 580mm, or 600mm, or 620mm or 640mm or 660mm, or 680mm, or 700mm, or 720mm, or 740mm, or 760mm, or 780mm, or 800mm, or 820mm, or 840mm or 860mm, or 880mm, or 900mm, or 920mm or 940mm or 960mm, or 980mm, or 1000mm.

For a gas turbine with a fan tip ratio of 110mm to 225mm the length of the engine may be between 420mm and 1020mm, and optionally between 510 and 1020mm. Optionally, for example for an engine with a fan tip radius in the range from 150mm to 180mm the engine length may be in the range from 730mm to 790mm.

The ratio of fan radius to engine length may be in the range 0.18 to 0.22, and further optionally in the range 0.19 to 0.21.

The gas turbine may have an axial compressor supplied with air from the upstream fan. The compressor may comprise one or more compressor stages. Each stage of the compressor may comprise a row of rotor blades and a row of stator vanes, which may be variable stator vanes (in that their angle of incidence may be variable). The row of rotor blades and the row of stator vanes may be axially offset from each other. There may be 3 or 4 or 5 or more compressor stages. The number of compressor stages divided by the fan tip radius (in mm) is in the range 0.013 to 0.055

In use air may be presented to the first (i.e. upstream) compressor stage in an axial direction and air may leave the first stage in an axial direction.

The one or more compressor stages may comprise a lowest pressure stage and may further comprise one or more compressor stages of increasing pressure to a highest pressure compressor stage. The lowest pressure compressor stage may be located furthest upstream along the gas flow path. The further higher pressure stages may be spaced axially along the gas flow path through the compressor in a downstream (rearward) direction.

Each row of rotor blades provided in the compressor may form an annular array of rotor blades carried by a respective rotor hub 46 (or rotor disc or drum). Each of the rotor blades may be coupled to the hub via a root received in a corresponding slot in a peripheral edge of the hub. Each of the rotor blades may be integrally coupled to the hub or integrally formed with the hub. Where the rotor blade is integrally coupled to the hub this may be achieved through friction welding of the blade to the hub and an optional step of machining to bring the blade and hub to a finished form. Where each rotor blade is integrally formed with the hub the blade and hub may be formed as a blank that is subsequently machined to provide the final form. Multiple stages may be welded together to form an integral drum. forward and rearward shafts may be welded to the integral drum to form a compressor assembly module.

Each rotor blade may be defined as having a radial span extending from the root (or hub) at a radially inner gas-washed location, or 0% span position, to an outer most radial tip at a 100% span position. The radius at the hub and the radius at the tip may both be measured at the leading edge (or axially forwardmost) part of the rotor blade. The radial span of each rotor blade refers to the gas-washed portion of the rotor blade, i.e. the portion radially outside any platform at which it is coupled to the hub.

Each of the rotor blades forming the compressor stage may have a leading edge mean radius point (or mid blade span) and a trailing edge mean radius point. The mean radius point is defined as the midpoint between the 0% span position and the 100% span position. It may be measured at the rotor blade leading edge (axially forward-most edge) or trailing edge (axially rearward-most edge) to give the leading edge mean radius point and the trailing edge mean radius point respectively.

The compressor tip radius may be measured between a centreline of the engine and an outermost tip of a compressor blade at its leading edge. The compressor tip radius may be the same for each compressor stage. The compressor tip radius may be different for one or more compressor stage.

The compressor tip radius, measured between a centreline of the engine and an outermost tip of a compressor blade at its leading edge, may be in the range from 45mm to 202mm, for example in the range from 55mm to 202mm, or alternatively in the range from 55mm to 115mm, or alternatively in the range from 110mm to 202mm. Within these ranges a compressor tip radius may be greater than any of: 45mm, 55mm, 65mm, 75mm, 85mm, 95mm, 105mm, 115mm, 125mm, 135mm, 145mm, 155mm, 165mm, 175mm, 185mm, 195mm, or 200mm. The compressor tip radius may be around any of: 45mm, 55mm, 65mm, 75mm, 85mm, 95mm, 105mm, 115mm, 125mm, 135mm, 145mm, 155mm, 165mm, 175mm, 185mm, 195mm, or 200mm.

Optionally, for example for an engine with a fan tip radius in the range from 90mm to 225mm, the compressor radius may be in the range from 45mm to 202mm. Optionally, for example for an engine with a fan tip radius in the range from 110mm to 225mm the compressor radius may be in the range from 55mm to 202mm. Optionally, for example for an engine with a fan tip radius in the range from 150mm to 180mm the compressor radius may be in the range from 95mm to 135mm.

The compressor may be connected to a turbine via an interconnecting shaft. The core length may be defined as the axial distance between a forward region of the compressor and a rearward region of the turbine that drives the turbine via the interconnecting shaft. The core length may be measured along a centreline of the engine from a mean radius point of the first stage of the compressor blade leading edge to a mean radius point of the lowest pressure turbine rotor stage blade trailing edge of the turbine. The core length may be in the range from 220mm to 560mm, and optionally 220mm to 400mm. Optionally, for example for an engine with a fan tip radius in the range from 110mm to 225mm the core length may be in the range from 270mm to 560mm. Optionally, for example for an engine with a fan tip radius in the range from 150mm to 180mm the core length may be in the range from 380mm to 440mm.

Where the compressor is a multistage compressor the number of stages divided by the fan tip radius in mm may be in the range from 0.013 to 0.055, and optionally in the range 0.013 to 0.028, and optionally in the range 0.018 to 0.044, and optionally in the range 0.017 to 0.026, and optionally in the range 0.022 to 0.055, and optionally in the range 0.022 to 0.045, and optionally in the range 0.022 to 0.031. The number of stages may be 3 or 4 or 5. The compressor may have compressor blades integrally mounted to a compressor hub driven by a turbine. The engine may have just one compressor positioned downstream of the fan.

The skilled person will appreciate that by providing an axial compressor in a gas turbine with the above dimensions it is possible to provide an engine within a small diameter nacelle. By providing air to the compressor in an axial direction, rather than a radial one, the air flow channels may be simplified along with providing a smaller diameter engine. The axial compressor, for flight applications, offers improved fuel efficiency over radial compressors for the same pressure ratios. This may permit a smaller and lighter fuel supply further increasing the efficiency of the engine. In a smaller engine the comparative weight saving is proportionally greater than in a larger engine further enhancing the fuel efficiency. Where the compressor is an integrally bladed rotor there may a weight saving over a bolted compressor. In a smaller engine the comparative weight saving is proportionally greater than in a larger engine further enhancing fuel efficiency and/or the operational efficiency of the engine. Where the compressor is an integrally bladed rotor there may be a length saving over a bolted compressor.

The skilled person will appreciate that by providing an axial compressor in a gas turbine with the above dimensions it is possible to address the challenge provided by scaling a conventional engine that results in components and engine systems that are extremely small where In such engines there is a likelihood that tolerances on manufacture or during operation are so extreme that manufacturing rejections and engine life results in uneconomic or unacceptable manufacture or operation.

The skilled person would appreciate that shortening an engine of a known engine type may create additional difficulties of creating sufficient compression within the engine. Particularly for low diameter engines known short compressors such as radial compressors may have too large a diameter. Physical limitations of air flow through the engine may provide a minimal axial spacing between components such that scaling a known engine configuration may not be appropriate resulting in a structure where certain aerodynamic flow parameters, for example turn vs axial velocity or volume vs polytrophic efficiency are outside acceptable values. In these arrangements any valid operating window may be unacceptably small.

The gas turbine may have an annular combustion chamber downstream of the compressor and upstream of the turbine. The combustor may have one or more fuel injectors at an upstream end. The combustor may have one or more guide vanes at a downstream end.

The combustor chamber may be defined between a radially inner wall and a radially outer wall. The combustor radial distance (C_{RD}) is defined as the distance between the inner wall and the outer wall and may be in the range: 50mm to 110mm, optionally in the range 50mm to 85mm, and further optionally in the range 80mm to 110mm. Within these ranges the radial distance may be above 50mm, or 55mm, or 60mm or 65mm, or 70mm or 75mm or 80mm or 85mm or 90mm, or 95mm, or 100mm or 105mm.

The ratio of combustor radial distance to fan radius may be of the order 0.35 to 0.60, and optionally in the range 0.40 to 0.55, and further optionally in the range 0.45 to 0.55, and further optionally in the range 0.40 to 0.50.

The axial distance between the downstream end of the fuel injector and upstream end of the guide vane may be in the range: 70mm to 170mm, optionally in the range 70mm to 125mm, and further optionally in the range 80mm to 125mm, and further optionally in the range 120mm to 170mm. Within these ranges the axial distance may be above 70mm, or 75mm, or 80mm, or 85mm, or 90mm, or 95mm, or 100mm or 105, or 110mm or 115mm, or 120mm.

The combustor volume may be in the range: 1.4L to 20L, optionally in the range 2.3L to 13.3L, and further optionally in the range 2.3L to 7L, and further optionally in the range 5L to 13.3L. Within these ranges the combustor volume may be above 1.5L, or 2.5L or 3.5L, or 4.5L, or 5.5L, or 6.5L, or 7.5L, or 8.5L or 9.5L, or 10.5L, or 11.5L, or 12.5L, or 13.5L, or 14.5L, or 15.5L, or 16.5L, or 17.5L, or 18.5L or 19.5L.

For an engine with a fan tip radius in the range from 110mm to 225mm the combustor volume may be in the range from 1.4L to 20L. Optionally, for example for an engine with a fan tip radius in the range from 150mm to 180mm the combustor volume may be in the range from 2.3L to 13.3L. Optionally, for example for an engine with a fan tip radius in the range from 150mm to 175mm the combustor volume may be in the range 4.5L to 7.5L.

The combustor volume in litres divided by the fan tip radius in mm may be in the range 0.015 to 0.083, optionally in the range 0.015 to 0.044, optionally in the range 0.015 to 0.036, optionally in the range 0.033 to 0.083, optionally in the range 0.033 to 0.068, optionally in the range 0.024 to 0.046.

Defining the combustor dimensions may allow more stable operation at various altitudes and speeds. A requirement of aero gas turbines that is not shared with land or marine based gas turbines or with hobby aircraft that typically fly below 400ft is that altitude and therefore ambient pressures and temperatures will vary significantly during the operation of the engine. The gas turbine should be able to operate continuously throughout its flight or have a robust restart mechanism. The combustor dimensions defined herein are configured to assist relight. The ratio of combustor dimensions to the fan tip radius may be greater than in known gas turbine engines.

It will be appreciated that scaling the combustor from known engine dimensions may provide a combustor that does not enable sufficient energy to be extracted from the fuel and power the engine over the required operational parameters, fail to ignite at altitude, or exhibit a greater than acceptable risk of flame-out during operation.

The engine may comprise a nacelle which surrounds a fan and the engine core comprising a turbine, a compressor and a core shaft connecting the turbine to the compressor. The engine core may comprise a casing (also referred to as an inner fixed structure). The bypass duct may be substantially annular. The bypass duct may be radially outside the core engine. The radially outer surface of the bypass duct may be defined by a nacelle and/or a fan case.

A bypass ratio is defined as the ratio of the mass flow rate of the flow through the bypass duct to the mass flow rate of the flow through the core at cruise conditions. The bypass ratio may be in the range: 0.1 to 2.5, optionally the bypass ratio may be in the range 0.2 to 1.5, optionally the bypass ratio may be within the range 0.1 to 0.7, optionally the bypass ratio may be in the range 0.7 to 1.5. Within these ranges the bypass ratio may be greater than (or on the order of) any of the following: 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4. The bypass ratio may be in an inclusive range bounded by any two of the values in the previous sentence (i.e. the values may form upper or lower bounds).

Optionally, for example for an engine with a fan tip radius in the range from 110mm to 225mm, the bypass ratio may be in the range from 0.2 to 1.5. Optionally, for example for an engine with a fan tip radius in the range from 150mm to 180mm the bypass to core ratio may be in the range from 0.5 to 0.9.

The use of a bypass duct and a bypass ratio in an engine with a fan tip radius in the range from 110mm to 225mm may improve the Specific Fuel Consumption (SFC) of the engine. In a small engine with a fan tip radius in the range from 110mm to 225mm an improved SFC would increase the range of the engine for a given amount of fuel. Where cargo is being carried by the aircraft the lighter load of fuel may enable a higher cargo load to be carried.

In a small diameter engine the use of a bypass flow may be counter-intuitive as it sits outside the engine core and may increases the overall diameter of the engine and /or place additional constraints on the dimensions of the engine core components such as the compressor, combustor, turbine, etc.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The skilled person will appreciate that a feature described above in relation to any one of the aspects may be applied, mutatis mutandis, to any other aspect of the invention. For example, in various embodiments any two or more of the conditions for ratios as defined above, and optionally all specified ratio ranges, may apply to any given aspect or embodiment. All aspects may apply to an engine of some embodiments. Furthermore, any feature described below may apply to any aspect and/or may apply in combination with any one of the claims.

The gas turbine engine as described and/or claimed herein may have any suitable general architecture. For example, the drive connecting the compressor and the turbine may be a shaft extending between the turbine and the compressor. The drive may be provided by a drive arm extending rearwardly from the compressor that interfaces directly with the turbine such that torque is transmitted. The drive may be provided by a drive arm extending forwardly from the turbine that interfaces directly with the compressor such that torque is transmitted. The drive may be provided by a drive arm extending rearwardly from the compressor that interfaces directly with a drive arm extending forwardly from the turbine such that torque is transmitted between the turbine and the compressor.

In any gas turbine engine as described and/or claimed herein, a combustor may be provided axially downstream of the fan and compressor. For example, the combustor may be directly downstream of (for example at the exit of) the compressor. By way of further example, the flow at the exit to the combustor may be provided to the inlet of the turbine. The combustor may be provided upstream of the turbine.

The compressor may comprise any number of stages. Each stage may comprise a row of rotor blades and a row of stator vanes, which may be variable stator vanes (in that their angle of incidence may be variable). The row of rotor blades and the row of stator vanes may be axially offset from each other.

The turbine may comprise any number of stages, for example multiple stages. Each stage may comprise a row of rotor blades and a row of stator vanes. The row of rotor blades and the row of stator vanes may be axially offset from each other.

The rotational speed of the fan may vary in use. The fan may have one, two or three stages.

A fan blade and/or aerofoil portion of a fan blade described and/or claimed herein according to any aspect may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge which may be manufactured using a material that is better able to resist impact (for example from birds, ice, or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

Each stage of the fan of a gas turbine as described and/or claimed herein may have any desired number of fan blades, for example 14, 16, 18, 20, 22, 24 or 26 fan blades.

Embodiments will now be described by way of example only, with reference to the Figures, in which:
FIG. 1 is a sectional side view of a gas turbine engine;
FIG. 2 is a close up sectional side view of a compressor of a gas turbine engine;
FIG. 3 is a close up sectional side view of a turbine of a gas turbine engine;
FIG. 4 is a close up sectional side view of a fan of a gas turbine engine;
FIG. 5 is a close up sectional side view of a combustor of a gas turbine engine;
FIG. 6 is a schematic sectional view of a rotor in a radial plane; and
Fig. 7 is a schematic view of an aircraft comprising gas turbine engines in three locations.

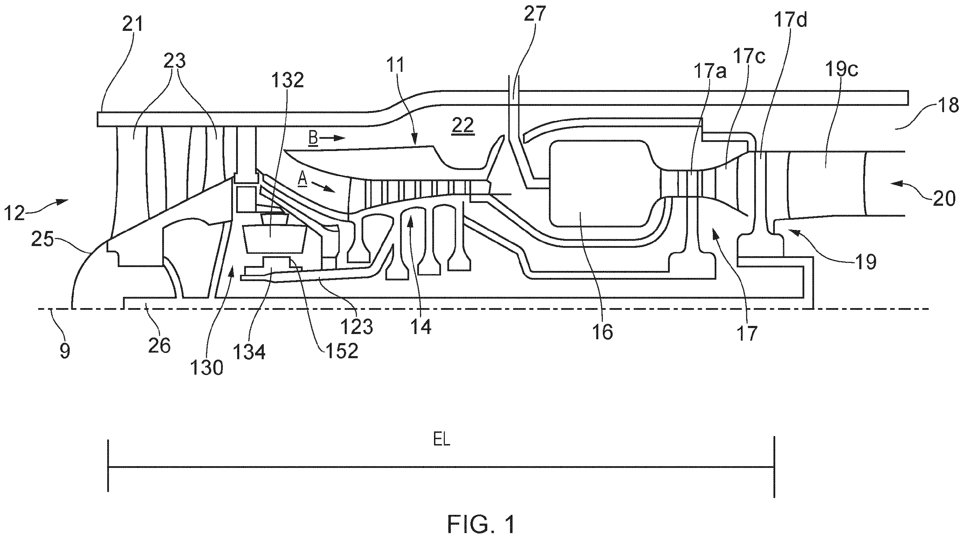

FIG. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a compressor 14, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26.

In use, the core airflow A is accelerated and compressed by the compressor 14. The compressed air exhausted from the compressor 14 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the compressor 14 by a suitable interconnecting drive 27. The drive may be a shaft or one or more drive arms extending from the compressor and/or turbine. The fan 23 may provide the majority of the propulsive thrust.

Other gas turbine engines to which the present disclosure may be applied may have alternative configurations. By way of further example, the gas turbine engine 10 shown in FIG. 1 has a mixed flow nozzle meaning that flow through the bypass duct and the flow through the core are mixed or combined, before (or upstream of) a single nozzle. However, this is not limiting, and various aspects of the present disclosure may also apply to engines in which the flow through the bypass duct 22 has its own nozzle 18 that is separate to and radially outside the core engine nozzle 20 this is known as a split flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction. The axial and radial directions are mutually perpendicular.

Referring again to FIGS. 1, the compressor 14 comprises multiple compressor stages. In the embodiment shown in FIG. 1, the compressor 14 comprises four compressor stages. Each stage of the compressor may comprise a row of rotor blades 14 a, 14 b and a row of stator vanes, which may be variable stator vanes (in that their angle of incidence may be variable). The row of rotor blades and the row of stator vanes may be axially offset from each other.

The one or more compressor stages may comprise a lowest pressure stage and may further comprise one or more compressor stages of increasing pressure to a highest pressure compressor stage. The lowest pressure compressor stage 14a may be located furthest upstream along the gas flow path within the lowest pressure compressor 14. The further higher pressure stages may be spaced axially along the gas flow path through the compressor in a downstream (rearward) direction.

The highest pressure turbine 17 similarly comprises one or more turbine stages. In the embodiment shown in FIG. 1, the highest pressure turbine 17 comprises one stage. Each turbine stage may comprise a row of rotor blades 17a and a row of stator vanes 17c, which may be variable stator vanes (in that their angle of incidence may be variable). The row of rotor blades and the row of stator vanes may be axially offset from each other.

The lowest pressure turbine 19 similarly comprises one or more turbine stages. In the embodiment shown in FIG. 1, the lowest pressure turbine 19 comprises one stage. Each turbine stage may comprise a row of rotor blades 19a and a row of stator vanes 19c, which may be variable stator vanes (in that their angle of incidence may be variable). The row of rotor blades and the row of stator vanes may be axially offset from each other.

The one or more turbine stages forming each turbine 17, 19 may comprise a highest pressure stage, and may further comprise one or more turbine stages of decreasing pressure to a lowest turbine pressure stage. The lowest pressure turbine stage may be located furthest downstream within each turbine 17, 19. The further pressure stages are spaced axially in an upstream (forward) direction along the gas flow path through the turbine. In embodiments with only one stage, the single stage is the lowest pressure stage.

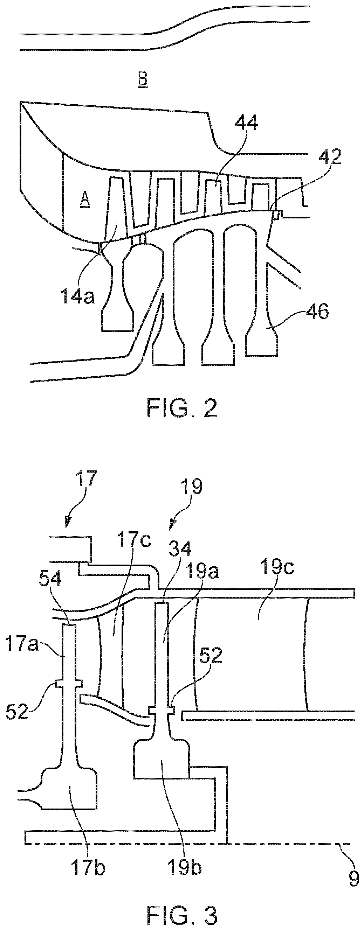

Each row of rotor blades provided in the compressor 14 may form an annular array of rotor blades 14a carried by a respective rotor hub 46 (or rotor disc), as shown by way of example in FIGS. 2. Each of the rotor blades 14a may be integrally formed with the hub 46 or joined to the hub to form an integral assembly. Where the blades are formed with the hub the entire assembly may be formed from a unitary piece of material that is subsequently machined to form both the shaft and hub configuration and the blades. Alternatively, each row of blades and a corresponding portion of the hub may be formed separately through machining of a blank and subsequently joined together to form the integral assembly. Any appropriate machining technique may be used both chemical and mechanical. For example, the assembly may be etched, milled, ground, etc. Any appropriate joining technique may be used e.g. welding, brazing, etc. amongst others. Alternatively, each blade 14a may be coupled to the hub 46 via a root received in a corresponding slot in a peripheral edge of the hub. An assembly may be formed by bolting together, or by using another appropriate mechanical technique, more than one rotor stage.

Each rotor blade 14a may be defined as having a radial span extending from the root 42 (or hub) at a radially inner gas-washed location, or 0% span position, to an outer most radial tip 44 at a 100% span position. The radius at the hub and the radius at the tip may both be measured at the leading edge (or axially forwardmost) part of the rotor blade. The radial span each rotor blade 44 refers to the gas-washed portion of the rotor blade, i.e. the portion radially outside any platform at which it is coupled to the hub.

Each of the rotor blades 44 forming the compressor stages may have a leading edge mean radius point (or mid blade span) and a trailing edge mean radius point. The mean radius point is defined as the midpoint between the 0% span position and the 100% span position. It may be measured at the rotor blade leading edge (axially forward-most edge) or trailing edge (axially rearward-most edge) to give the leading edge mean radius point and the trailing edge mean radius point respectively.

Each row of rotor blades provided in the turbine(s) 17, 19 may form an annular array of rotor blades 17a, 19a carried by a respective rotor hub 17b, 19b (or rotor disc), as shown by way of example in FIGS. 3. Each of the rotor blades 17a, 19a may be integrally formed with the hub 17b, 19b or joined to the hub to form an integral assembly. Where the blades are formed with the hub the entire assembly may be formed from a unitary piece of material that may be subsequently machined to form both the shaft and hub configuration and the blades. For some uses the near net-shape forming may be sufficiently precise that machining of the aerofoils and the hub may not be required. Alternatively, each row of blades and a corresponding portion of the hub may be formed separately through machining of a blank and subsequently joined together to form the integral assembly. Any appropriate machining technique may be used both chemical and mechanical. For example, the assembly may be etched, milled, ground, etc. Any appropriate joining technique may be used e.g. welding, brazing, etc. amongst others. Alternatively, each blade 17a, 19a may be coupled to the hub 17b, 19b via a root received in a corresponding slot in a peripheral edge of the hub.

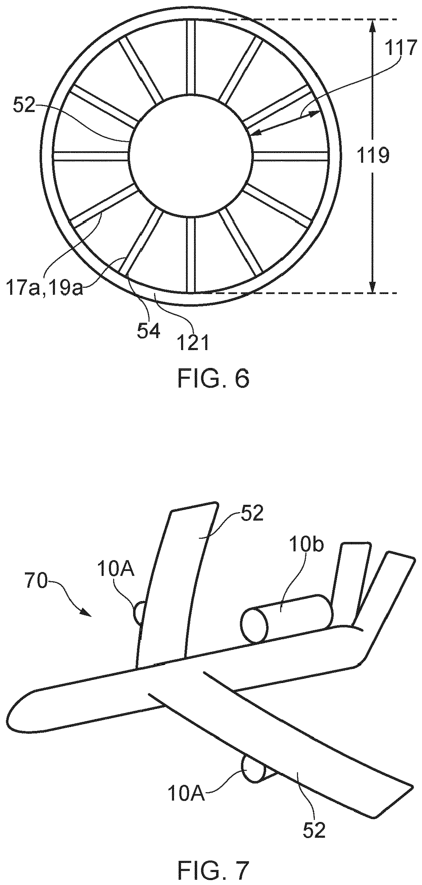

As exemplified in Figure 6, each rotor blade 17a, 19a may be defined as having a radial span 117 extending from the root 52 (or hub) at a radially inner gas-washed location, or 0% span position, to an outer most radial tip 54 at a 100% span position. The radius at the hub and the radius at the tip may both be measured at the leading edge (or axially forwardmost) part of the rotor blade. The radial span 117 of each rotor blade 17a, 19a refers to the gas-washed portion of the rotor blade, i.e. the portion radially outside any platform at which it is coupled to the hub. A casing 121 with a diameter 119 surrounds the rotor and carries the stators (not shown) downstream of each rotor.

Each of the rotor blades 17a, 19a forming the turbine stages may have a leading edge mean radius point (or mid blade span) and a trailing edge mean radius point. The mean radius point is defined as the midpoint between the 0% span position and the 100% span position. It may be measured at the rotor blade leading edge (axially forward-most edge) or trailing edge (axially rearward-most edge) to give the leading edge mean radius point and the trailing edge mean radius point respectively.

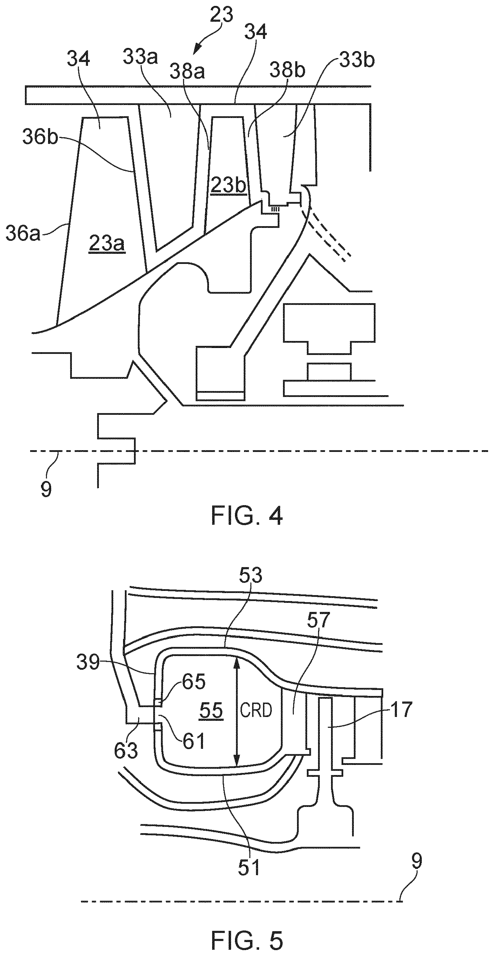

As exemplified in Figure 4, the fan 23 comprises a first and second annular array of fan blades 23a, 23b extending from a hub 32 which, with a corresponding stator 33a, 33b, form respective fan stages. Each fan blade 23a, 23b may be defined as having a radial span extending from the hub 32 at a radially inner gas-washed location, or 0% span position, to a tip 34 at a 100% span position. Each of the fan blades 23a, 23b may be integrally formed with the hub 32 or joined to the hub to form an integral assembly. Where the blades are formed with the hub the entire assembly may be formed from a unitary piece of material that is subsequently machined to form both the shaft and hub configuration and the blades. Alternatively, each row of blades and a corresponding portion of the hub may be formed separately through machining of a blank and subsequently joined together to form the integral assembly. Any appropriate machining technique may be used both chemical and mechanical. For example, the assembly may be etched, milled, ground, etc. Any appropriate joining technique may be used e.g. welding, brazing, etc. amongst others. Alternatively, each blade 23a, 23b may be coupled to the hub 32 via a root received in a corresponding slot in a peripheral edge of the hub.

The multiple fan stages may provide a lowest pressure stage 23a, 33a, and a fan stage of higher pressure 23b, 33b. The highest pressure fan stage may be located furthest downstream within the fan. The further pressure stages are spaced axially in a downstream (rearward) direction along the gas flow path through the turbine. In embodiments with only one stage, the single stage is the lowest pressure stage.

The hub 32 may be substantially conical in that at an upstream end of the fan the distance between the 0% span location and the axis of the engine is less than the distance between the 0% fan location and the axis of the engine at the downstream end of the fan.

The ratio (R_{hub/}Rₜᵢₚ)of the radius at the leading edge of the upstream fan blade 34 at the hub (R_{hub}) to the radius of the upstream fan blade at the tip (Rₜᵢₚ)may be greater than (or on the order of) any of: 0.28, 0.30, 0.32, 0.34, 0.36, 0.38, 0.40. The ratio of the radius of the fan blade 23a at the fan hub 32 to the radius of the fan blade at the tip 34 may be in an inclusive range bounded by any two of the values in the previous sentence (i.e. the values may form upper or lower bounds). These ratios may commonly be referred to as the hub-to-tip ratio. The fan blade 23b has a leading edge 36b and a trailing edge 38b defined along the direction of gas flow through the engine. The radius at the fan hub 32 and the radius at the tip 34 may both be measured at the leading edge 36b (or axially forward-most) part of the blade or at the trailing edge 38b (or axially rearward-most) part of the blade. The hub-to-tip ratio refers to the gas-washed portion of the fan blade, i.e. the portion radially outside any platform by which each fan blade is coupled to the hub. The ratio (R_{hub}/Rₜᵢₚ)of the radius of a second or third downstream fan blade 34 at the hub (R_{hub}) to the radius of the downstream fan blade at the tip (Rₜᵢₚ)may be greater than (or on the order of) any of: 0.50, 0.52, 0.54, 0.56, 0.58, 0.60, 0.62, 0.64, 0.66, 0.68 or 0.70. The ratio of the radius of the fan blade 23b at the fan hub 32 to the radius of the fan blade at the tip 34 may be in an inclusive range bounded by any two of the values in the previous sentence (i.e. the values may form upper or lower bounds).

The depicted fan rotor may be formed of an appropriate material preferably an elemental metal such as lithium, titanium, or aluminium, or a metal alloy. The rotor may also partially, or fully, comprise a composite material.

The ratio (R_{hub}/Rₜᵢₚ) of the radius of the stator downstream of the downstream fan blade 34 at the hub (R_{hub}) to the radius of the downstream fan blade at the tip (Rₜᵢₚ)may be in the range 0.70 to 0.82 and within this range greater than (or on the order of) any of: 0.70, 0.72, 0.74, 0.76, 0.78, 0.80. The ratio of the radius of the fan blade 23b at the fan hub 32 to the radius of the fan blade at the tip 34 may be in an inclusive range bounded by any two of the values in the previous sentence (i.e. the values may form upper or lower bounds).

The ratio (Stator Downstream Fan Stator Rₜᵢₚ/ Forward Fan Blade Rₜᵢₚ) i.e. the radial distance between the radially outer extent of the downstream fan stator and the radius of the forward fan blade 34 at the tip may be in the range 0.95 to 1.05 and within this range greater than (or on the order of) any of: 0.95, 0.96, 0.97, 0.98,0.99, 1.00, 1.01, 1.02, 1.03, 1.04, 1.05. The ratio may be in an inclusive range bounded by any two of the values in the previous sentence (i.e. the values may form upper or lower bounds).

The ratios may help to ensure that the fan stages compress the air sufficiently whilst creating a cavity between the hub and the centreline of the engine to mount an electrical generator.

At the trailing edge of the downstream fan stator an offtake is provided in the radially inner surface of the main gas path that directs air to a downstream component such as a compressor rotor cavity for cooling the compressor hub and pressurising the cavity and /or a turbine for cooling and/or comp. The location may be at an interface between two static parts and upstream of the point at which the airflow splits into a core flow and a bypass flow. The location may be at a point where the air is at sufficient pressure to flow through the compressor cavity.

The gas turbine engine may comprise an electric machine arrangement, which is configured to produce electrical power, and/or provide motive power to start the engine. The electric machine arrangement comprises a starter generator 130, which comprises an electric machine stator 132 and an electric machine rotor 134 separated by a radial air gap 152. The electric machine rotor 134 is coupled to the compressor forward drive arm 123, while the stator 132 is coupled to static structure. The electric machine 130 is provided forward of the compressor 14, and rearward of the fan 12, in an annular space provided radially inward of the gas flow path.

The combustor, depicted in Figure 5, may be an annular combustor having a radially inner wall 51 and a radially outer wall 53. Both are coaxial with the engine axis 9 and together partially define an annular combustion volume 55. A nozzle guide vane 57 is positioned at the downstream end of the combustor to condition the hot combustion gasses before they reach the turbine rotor 17. A radially extending combustor head 59 provides the upstream bound of the combustor and is provided with a circumferential array of injector ports 61 into which an injector 63 is mounted. A swirler configuration 65 provides vents that supply air into the combustor.

Fuel is injected into the combustor volume through the injector where it is mixed with swirling air and ignited.

The combustor radial distance (C_{RD}) defined as the radial distance between the inner wall and the outer wall may be in the range: 50mm to 110mm, optionally in the range 50mm to 85mm, and further optionally in the range 80mm to 10mm.

The ratio of combustor radial distance to fan radius may be of the order 0.35 to 0.60, and optionally in the range 0.40 to 0.55, and further optionally in the range 0.45 to 0.55, and further optionally in the range 0.40 to 0.50.

The axial distance between the downstream end of the fuel injector and upstream end of the guide vane may be in the range: 70mm to 170mm, optionally in the range 70mm to 125mm, and further optionally in the range 80mm to 125mm, and further optionally in the range 120mm to 170mm.

The combustor volume may be in the range: 1.4L to 20L, optionally in the range 2.3L to 13.3L, and further optionally in the range 2.3L to 7L, and further optionally in the range 5L to 13.3L.

For an engine with a fan tip radius in the range from 110mm to 225mm the combustor volume may be in the range from 1.4L to 20L. Optionally, for example for an engine with a fan tip radius in the range from 150mm to 175mm the combustor volume may be in the range from 2.3L to 13.3L. Optionally, for example for an engine with a fan tip radius in the range from 150mm to 180mm the combustor volume may be in the range 4.5L to 7.5L.

The combustor volume in litres divided by the fan tip radius in mm may be in the range 0.018 to 0.083, optionally in the range 0.018 to 0.044, optionally in the range 0.018 to 0.036, optionally in the range 0.033 to 0.083, optionally in the range 0.033 to 0.068, optionally in the range 0.024 to 0.046.

The gas turbine engine may be described by one or more of the following parameters:

### Engine Length:

Referring to FIG 1, the gas turbine engine 10 of the embodiments being described has an engine length (EL) defined as the axial distance between: the intersection of the leading edge 36a of one of lowest pressure fan blades 23a and the hub 32; and the intersection of the trailing edge of one of the rotor blades 19a provided in the lowest pressure stage of the lowest pressure turbine 19.

In the embodiments being described, the engine length may be in the range: 420mm to 1020mm, optionally in the range 420 to 760mm, and further optionally in the range 740 to 1020mm. Within these ranges the engine length may be above 420mm, or 440mm, or 460mm or 480mm, or 500mm or 520mm or 540mm or 560m or 580mm, or 600mm, or 620mm or 640mm or 660mm, or 680mm, or 700mm, or 720mm, or 740mm, or 760mm, or 780mm, or 800mm, or 820mm, or 840mm or 860mm, or 880mm, or 900mm, or 920mm or 940mm or 960mm, or 980mm, or 1000mm.

For a gas turbine with a fan tip ratio of 110mm to 225mm the length of the engine may be between 420mm and 1020mm, and optionally between 510 and 1020mm. Optionally, for example for an engine with a fan tip radius in the range from 150mm to 180mm the engine length may be in the range from 730mm to 790mm.

### Core Length:

Referring to FIG. 1, the gas turbine engine 10 has a core length defined as the axial distance between a forward region of the compressor 14 and a rearward region of the low pressure turbine 19 , and more specifically the axial distance between the intersection of the leading edge of the first stage of the low pressure compressor 14 with the compressor hub and the mean radius point (mid blade span) of the lowest pressure turbine rotor stage blade 17a trailing edge of the higher pressure turbine 17 .

In the embodiments being described the core length may be in the range from 220mm to 560mm, and optionally 220mm to 400mm. Optionally, for example for an engine with a fan tip radius in the range from 110mm to 225mm the core length may be in the range from 270mm to 560mm. Optionally, for example for an engine with a fan tip radius in the range from 150mm to 180mm the core length may be in the range from 380mm to 440mm.

### Fan Tip Radius:

The radius of the fan 23, also referred to as the fan tip radius, or R_{fan} tip, may be measured between the engine centreline 9 and the tip 34 of a fan blade 23a, 23b at its leading edge 36a, 36b (in a radial direction). The fan diameter may simply be defined as twice the radius of the fan 23.

The fan tip radius may be measured between a centreline of the engine and an outermost tip of each fan blade at its leading edge-this may equivalently be described as the fan tip radius being defined as the radial distance between a centreline of the engine and an outermost tip of each fan blade at its leading edge. The fan face area may be equal to π multiplied by the square of the fan tip radius.

In the embodiments being described, the fan tip radius may be in the range from 90mm to 225mm, for example in the range from 110mm to 225mm, or alternatively in the range from 150mm to 200mm

In some embodiments the fan tip radius of an upstream fan blade may be the same as the fan tip radius of a downstream fan blade. In some embodiments the fan tip radius of an upstream fan blade may be greater than the fan tip radius of a downstream fan blade. In some embodiments the fan tip radius of an upstream fan blade may be less than the fan tip radius of a downstream fan blade.

### Compressor Tip Radius

The compressor tip radius may be measured between a centreline of the engine and an outermost tip of a compressor blade at its leading edge. The compressor tip radius may be the same for each compressor stage. The compressor tip radius may be different for one or more compressor stage.

In the embodiments being described the compressor tip radius may be in the range from 45mm to 202mm, for example in the range from 55mm to 202mm, or alternatively in the range from 55mm to 115m, or alternatively in the range from 110mm to 202mm,

For an engine with a fan tip radius in the range from 90mm to 225mm, the compressor radius may be in the range from 45mm to 202mm. Optionally, for example for an engine with a fan tip radius in the range from 110mm to 225mm the compressor radius may be in the range from 55mm to 202mm. Optionally, for example for an engine with a fan tip radius in the range from 150mm to 180mm the compressor radius may be in the range from 95mm to 135mm.

### Number of Compressor Stages to Fan Tip Radius

The compressor may be a multistage compressor with multiple arrays of rotating blades associated with downstream stators. In the embodiments being described the number of compressor stages divided by the fan tip radius may be in the range 0.013 to 0.055.

Optionally the number of compressor stages divided by the fan tip radius may be in the range 0.013 to 0.028, and optionally in the range 0.018 to 0.044, and optionally in the range 0.017 to 0.026, and optionally in the range 0.022 to 0.055, and optionally in the range 0.022 to 0.045, and optionally in the range 0.022 to 0.031. The number of stages may be 3 or 4 or 5.

### Bypass to Core Ratio

A bypass ratio is defined as the ratio of the mass flow rate of the flow through the bypass duct to the mass flow rate of the flow through the core at cruise conditions.

In the embodiments being described the bypass ratio may be in the range: 0.1 to 2.5, for example in the range 0.2 to 1.5, or alternatively within the range 0.1 to 0.7, or alternatively within the range 0.7 to 1.5.

Optionally, for example for an engine with a fan tip radius in the range from 110mm to 225mm, the bypass ratio may be in the range from 0.2 to 1.5. Optionally, for example for an engine with a fan tip radius in the range from 150mm to 180mm the bypass to core ratio may be in the range from 0.5 to 0.9.

### Combustor Dimensions

The gas turbine may have an annular combustion chamber downstream of the compressor and upstream of the turbine. The combustor may have one or more fuel injectors at an upstream end. The combustor may have one or more guide vanes at a downstream end.

In the embodiments being described the radial distance between an inner wall and an outer wall may be in the range: 50mm to 110mm, optionally in the range 50mm to 85mm, and further optionally in the range 80mm to 110mm.

In the embodiments being described the ratio of combustor radial distance to fan radius may be of the order 0.35 to 0.60, and optionally in the range 0.40 to 0.55, and further optionally in the range 0.45 to 0.55, and further optionally in the range 0.40 to 0.50.

In the embodiments being described the axial distance between the downstream end of the fuel injector and upstream end of the guide vane may be in the range: 70mm to 170mm, optionally in the range 70mm to 125mm, and further optionally in the range 80mm to 125mm, and further optionally in the range 120mm to 170mm.

In the embodiments being described the combustor volume may be in the range: 1.4L to 20L, optionally in the range 2.3L to 13.3L, and further optionally in the range 2.3L to 7L, and further optionally in the range 5L to 13.3L.

For an engine with a fan tip radius in the range from 110mm to 225mm the combustor volume may be in the range from 1.4L to 20L. Optionally, for example for an engine with a fan tip radius in the range from 150mm to 175mm the combustor volume may be in the range from 2.3L to 13.3L. Optionally, for example for an engine with a fan tip radius in the range from 150mm to 175mm the combustor volume may be in the range 4.5L to 7.5L.

### Combustor volume to fan tip radius

In the embodiments being described the combustor volume divided by the fan tip radius may be in the range 0.018 to 0.083, optionally in the range 0.018 to 0.044, optionally in the range 0.018 to 0.036, optionally in the range 0.033 to 0.083, optionally in the range 0.033 to 0.068, optionally in the range 0.024 to 0.046.

In the embodiment being described, the turbine 19 is a first turbine 19 and the engine 10 comprises a second turbine 17 arranged to rotate at a higher rotational speed.

Figure 7 provides a schematic illustration of engines 10a located under the wings 52 of an aircraft 70 and also shows an engine 10b mounted to the top of the fuselage. Either of the engines 10a, or 10b may be removed of altered depending on the required use. It will be appreciated that other configurations may be appropriate such as embedding the engine within the wing, within the fuselage, or elsewhere, and a duct is provided to supply air to the engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine for an aircraft,
the engine comprising an engine core (11) having a core length and comprising a first turbine (17a), an axial compressor (14), and a drive connecting the first turbine to the axial compressor,
the engine core further comprising a second turbine (17d), and a fan shaft (26) connecting the second turbine to a fan (23) located upstream of the engine core, the fan comprising a plurality of fan blades (23a, 23b) extending from a fan hub (25),
the fan having a tip radius in the range from 90mm to 225mm and wherein the fan has two stages of rotating fan blades (23a, 23b) with a first stage upstream of, and axially separated from, a second stage with an array of stators axially located between the first stage and the second stage.

2. A gas turbine engine according to claim 1 wherein a fan hub has a radius in the range from 65mm to 165mm at a leading edge of an upstream fan blade (23a) and a radius in the range of 80mm to 165mm at the trailing edge of a downstream fan blade (23b).

3. A gas turbine engine according to claim 1, wherein a fan blade span (117) of the axially forwards blades is in the range from 60mm to 150mm and a fan blade span of the axially rearward blades is in the range from 35mm to 90mm.

4. A gas turbine engine according to claim 2, wherein a fan blade span (117) of the axially forwards blades is in the range from 60mm to 150mm and a fan blade span of the axially rearward blades is in the range from 35mm to 90mm.

5. A gas turbine engine according to claim 1, wherein a difference in the fan passage ratio taken at a leading edge (36a) of an upstream fan blade and the trailing edge of a stator (33) downstream of a downstream blade (23b) is below 15% of the fan passage ratio taken at a leading edge of an upstream fan blade.

6. A gas turbine engine according to claim 1, wherein the ratio (R_{hub}/Rₜᵢₚ) of the radius at the leading edge (36a) of the upstream fan blade (23a) at the hub (R_{hub}) to the radius of the upstream fan blade (23a) at the tip (Rₜᵢₚ)may be in the range of 0.28:0.40.

7. A gas turbine engine according to claim 1, wherein the ratio (R_{hub}/Rₜᵢₚ) of the radius of a downstream fan blade (23b) at the hub (R_{hub}) to the radius of the downstream fan blade (23a) at the tip (Rₜᵢₚ) may be in the range of 0.50:0.70.

8. A gas turbine engine according to claim 6, wherein the ratio (R_{hub}/Rₜᵢₚ) of the radius of a downstream fan blade (23a) at the hub (R_{hub}) to the radius of the downstream fan blade (23a) at the tip (Rₜᵢₚ) may be in the range of 0.50:0.70.

9. A gas turbine engine according to claim 1, wherein the fan tip radius is in the range 150mm to 175mm.

10. A gas turbine engine according to claim 1, wherein a fan blade span of the axially forwards blades (23a) is in the range from 60mm to 150mm and a fan blade span of the axially rearward blades (23b) is in the range from 35mm to 90mm.

11. A gas turbine according to claim 1, wherein the axial compressor (14) comprises 3, 4 or 5 adjacent stages of rotors and stators.

12. A gas turbine engine according to claim 1, further comprising a nacelle or outer casing (21) radially outside the engine core to define a bypass duct (22) that is separate to the core.

13. A gas turbine engine according to claim 1, further comprising an annular combustor (16) with an internal volume in flow series between the compressor (14) and the turbine (17), wherein the combustor volume (in litres) divided by the fan tip radius (in mm) is in the range 0.015 to 0.083.

14. A gas turbine engine according to claim 1 further comprising an embedded electric motor or generator (132) positioned radially inside the fan hub (25).
